(19) **Europäisches Patentamt / European Patent Office / Office européen des brevets**

(11) **EP 2 862 112 B1**

(12) # EUROPEAN PATENT SPECIFICATION

(45) Date of publication and mention
of the grant of the patent:
**05.01.2022  Bulletin 2022/01**

(51) Int Cl.:
*A63F 13/30* (2014.01)     *A63F 13/35* (2014.01)
*A63F 13/75* (2014.01)     *A63F 13/837* (2014.01)

(21) Application number: **13828391.6**

(22) Date of filing: **25.07.2013**

(86) International application number:
**PCT/CN2013/080080**

(87) International publication number:
**WO 2014/023162 (13.02.2014 Gazette 2014/07)**

(54) **ANTI-CHEATING METHOD AND SYSTEM FOR ONLINE GAMES**

BETRUGSVERHINDERUNGSVERFAHREN UND -SYSTEM FÜR ONLINE-SPIELE

PROCÉDÉ ET SYSTÈME ANTI-TRICHERIE POUR DES JEUX EN LIGNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.08.2012  CN 201210277957**

(43) Date of publication of application:
**22.04.2015  Bulletin 2015/17**

(73) Proprietor: **Tencent Technology (Shenzhen)
Company Limited
Shenzhen, Guangdong 518044 (CN)**

(72) Inventors:
 • **GUO, Bijian
  Shenzhen
  Guangdong 518044 (CN)**

 • **LIN, Jiang
  Shenzhen
  Guangdong 518044 (CN)**
 • **LI, Qing
  Shenzhen
  Guangdong 518044 (CN)**

(74) Representative: **AWA Sweden AB
P.O. Box 45086
104 30 Stockholm (SE)**

(56) References cited:
 **EP-A1- 1 737 178       EP-A1- 2 144 032
 CN-A- 102 571 695       GB-A- 1 424 299
 GB-A- 2 443 264          US-A1- 2006 199 626
 US-A1- 2007 078 929    US-A1- 2007 078 929
 US-A1- 2010 169 647**

**Description**

FIELD OF THE INVENTION

The present invention generally relates to computer technologies and, more particularly, to an anti-cheating method and system for online games.

BACKGROUND

An electronic game refers to a video game that employs electronics (e.g., computer, game device, etc.) to create an interactive system with which a player can play.

With the rapid development of computer technology and networking technology, the Internet is playing an increasingly important role in our daily life, study and work. A multiplayer gaming platform provides multiple players with online gaming services on the Internet, such that users may play games easily through the Internet, just like playing games on a local area network (LAN). Through network protocol conversion technology, the multiplayer gaming platform closely connects players from far away geographical locations, and also provides real-time information exchanges and communications.

Any games based on a LAN can be played on the multiplayer gaming platform through a local area network, without the need for a dedicated server or for remembering complicated IP addresses. Therefore, the player can play games with other players more conveniently. In every room of the multiplayer gaming platform, all players can play games with others just like through the local area network. The players can interact with each other through the local area network, and communicate with others at any time, enjoying the fun of playing games.

A plug-in (or plugin) is a cheating program that modifies the design and structure of one or more online games to give one player an advantage over others.

The calculation of a ballistic trajectory of a projectile is often involved in online games. With existing technology, the ballistic trajectory is usually calculated in the client. If there are multiple clients, each client individually calculates the ballistic trajectory. Then, the client sends a calculation result to the server. After the server checks the calculation result and calculates damage, the server sends back a calculated damage result to the client. However, in this method, because the trajectory is calculated in the client, the algorithm may be easily cracked by the plug-in; and incorrect ballistic trajectory information is sent to the server by packet data or offline hanging, etc. Thus, one player may obtain advantages over other players when playing the game by using the plug-in. The balance of the game is affected, making the game lose its fair feature and interfering with the normal order of the game.

The disclosed method and apparatus are directed to solve one or more problems set forth above and other problems.

An example of prior art method is described in EP1737178A1, wherein the method uses a portable object for providing an extension to a server. The method can ensure the server safely rely on data from the various SPOs, connected directly to the server, at the client's side and also can reduce the load on the server by doing, by the SPOs, part of the server job and optimizing the whole process.

Examples of projectile impact simulations are disclosed in EP2144032 and GB1424299. However, these documents don't disclose the calculation of terrain impact parameters by a server device and the transmission of such parameters to a client device for it to show the effects on a terrain.

BRIEF SUMMARY OF THE DISCLOSURE

An aspect of the present disclosure includes an anti-cheating method for online games between a server and a client according to independent claim 1.

Also provided is an anti-cheating system for online games between a server and a client according to independent claim 5.

Also provided is a server for online games according to independent claim 9.

BRIEF DESCRIPTION OF THE DRAWINGS

The exemplary embodiments of the present invention are described in detail by referring to the accompanying drawings, such that those skilled in the art can understand the features and advantages of the present invention. In the accompanying drawings:

Figure 1 illustrates a flow diagram of an exemplary anti-cheating method for online games consistent with the disclosed embodiments;

Figure 2 illustrates a schematic diagram of an exemplary online game map that is divided into numerous terrain squares consistent with the disclosed embodiments;

Figure 3 illustrates a data storage diagram of an exemplary online game map consistent with the disclosed embodiments;

Figure 4 illustrates a data storage diagram of an exemplary hole map of a projectile consistent with the disclosed embodiments;

Figure 5 illustrates a schematic diagram of an exemplary AND operation for terrain data and hole map data of a projectile consistent with the disclosed embodiments.

Figure 6 illustrates a schematic diagram of a result of the exemplary AND operation for terrain data and hole map data of a projectile consistent with the disclosed embodiments;

Figure 7 illustrates a schematic diagram of an exemplary OR operation for terrain data and hole map data of a projectile consistent with the disclosed embodiments;

Figure 8 illustrates a schematic diagram of a result of the exemplary OR operation for terrain data and hole map data of a projectile consistent with the disclosed embodiments;

Figure 9 illustrates an exemplary gaming system for online games consistent with the disclosed embodiments; and

Figure 10 illustrates a block diagram of an exemplary computer system capable of implementing the client and/or the server.

## DETAILED DESCRIPTION

Reference will now be made in detail to exemplary embodiments of the invention, which are illustrated in the accompanying drawings.

For a turn-based war game, based on the specific operations of the player, a client determines launch parameters of a projectile including a launch angle of the projectile, a launch force of the projectile, an initial launch velocity of the projectile, and sends the launch parameters to a server. The server calculates a ballistic trajectory, the destruction and damage of the terrain based on the received launch parameters, and sends calculation results to the client. Then, the client shows a specific picture presentation based on the received ballistic trajectory, the destruction and damage of the terrain. Thus, the server performs key logical operations and sends the operation results to the client. The client only shows the operation results rather than performs the key logical operations. Therefore, interference from the plug-in is prevented, further improving the fair feature of the game.

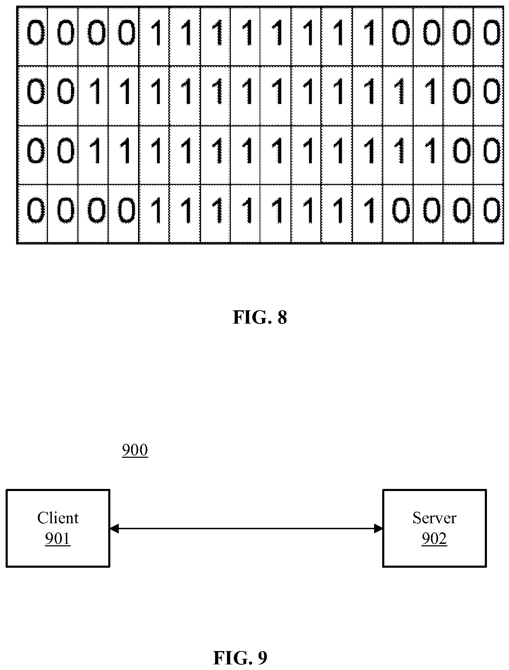

Figure 9 illustrates an exemplary game system 900 incorporating certain disclosed embodiments. As shown in Figure 9, the game system 900 may include a client 901 and a server 902. The client 901 may access the server 902 through the Internet for certain gaming services provided by the server 902. Although only one server 902 and one client 901 are shown in the game system 900, any number of clients 901 or servers 902 may be included, and other devices may also be included.

The Internet (not labeled) may include any appropriate type of communication network for providing network connections to the client 901 and the server 902 or among multiple clients 901 and servers 902. For example, the Internet may include the Internet based on the TCP/IP protocol or other types of computer networks or telecommunication networks, which may be either wired or wireless.

A client, as used herein, may refer to any appropriate user client with certain computing capabilities, such as a personal computer (PC), a work station computer, a server computer, a hand-held computing device (tablet), a smart phone or mobile phone, or any other user-side computing device. In certain embodiments, the client 901 may be a wireless client, such as a smart phone, a tablet computer, or a mobile phone, etc.

A server, as used herein, may refer to one or more server computers configured to provide certain web server functionalities to provide certain personalized services, which may require any user accessing the services to be authenticated by the server before the access. A web server may also include one or more processors to execute computer programs in parallel.

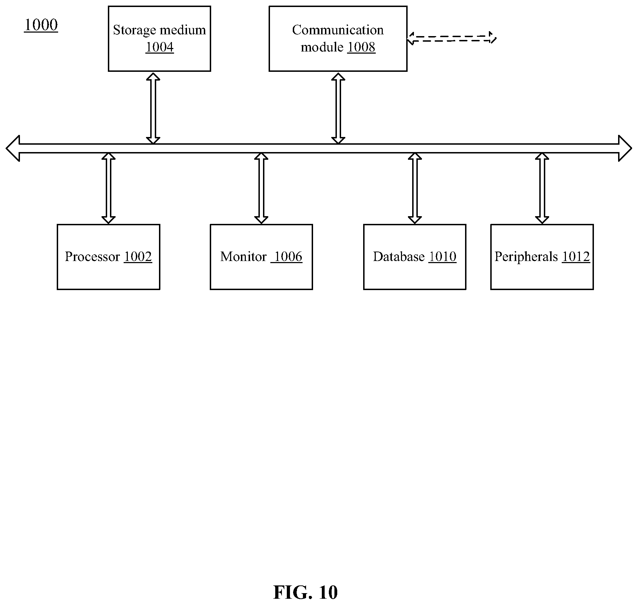

The client 901 and/or the server 902 may be implemented on any appropriate computing platform. As shown in Figure 10, a computer system 1000 may include a processor 1002, a storage medium 1004, a monitor 1006, a communication module 1008, a database 1010, and peripherals 1012, among which, certain devices may be omitted and other devices may be additionally included.

The processor 1002 may include any appropriate processor or processors. Further, the processor 1002 can include multiple cores for multi-thread or parallel processing. The storage medium 1004 may include memory modules, such as ROM, RAM, flash memory modules, and erasable and rewritable memory, and mass storages, such as CD-ROM, U-disk, and hard disk, etc. The storage medium 1004 may store computer programs for implementing various processes, when executed by the processor 1002.

Further, the peripherals 1012 may include I/O devices such as a keyboard and a mouse, and the communication module 1008 may include network devices for establishing connections through the communication network. The database 1010 may include one or more databases for storing certain data and for performing certain operations on the stored data, such as database searching.

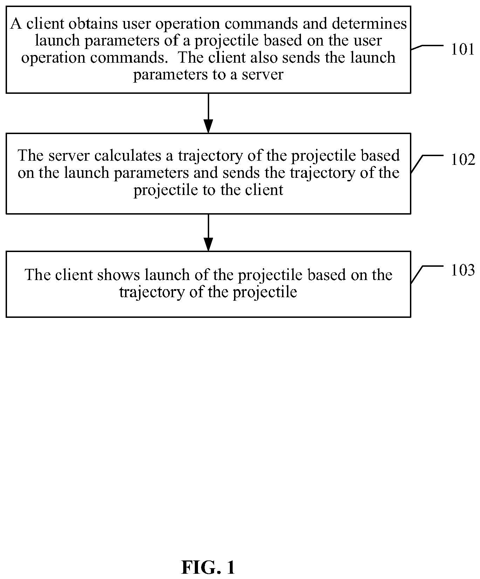

In operation, the client 901 and the server 902 may interact with each other to provide enhanced online gaming services to the user(s) of the client 901. Figure 1 illustrates a flow diagram of an exemplary anti-cheating method for online games consistent with the disclosed embodiments.

As shown in Figure 1, the method includes the following steps:

Step 101: the client obtains user operation commands, determines launch parameters of the projectile based on the user operation commands, and sends the launch parameters to the server.

In a variety of online games, game operations often involve launching objects. For example, tanks fire bombs; aircrafts fire missiles; game actors fire bullets. The game operations are related to the launch process of the projectiles.

The online games that are related to launching projectiles may include both Player vs Player (PvP) games and Player vs Environment (PvE) games. The PvP game is a type of multiplayer interactive game between two or more live participants; while the PvE game is a game that a player competes against a computer-controlled non-player character (NPC), such as monsters, boss, etc.

At the beginning, the client first obtains the user operation commands. Then, the client determines the launch parameters of the projectile based on the user operation commands.

The client may set in advance corresponding relationships between the operation commands and the launch parameters. Then, the client determines the launch parameters of the projectile from the obtained user operation commands. For example, the user operation commands may be obtained from: pressing a preset specific key by the user; pressing a mouse by the user; pressing a key for a predefined time period by the user; clicking a mouse for a predefined time period by the user; joystick operations, and so on.

The launch parameters may further include: a launch angle of the projectile, a launch force of the projectile, an initial launch velocity of the projectile, etc. The client determines the launch parameters of the projectile based on the user operation commands and sends the launch parameters to the server.

Step 102: the server calculates the trajectory of the projectile based on the launch parameters and sends the trajectory of the projectile to the client.

The trajectory of the projectile may be calculated by the real physical integral formulas. Calculation principles may include: calculating forces involved in projectile motion; setting an initial state of the projectile; calculating trajectory coordinates of the projectile by integration based on the initial state and the forces involved in projectile motion, etc.

The calculation process further includes:

Calculation step 1: calculating various forces involved in projectile motion.

In the real world, a flying projectile is influenced by air resistance, wind force, gravity, etc. In online games, the forces may be simulated. For example, the air resistance may be calculated based on a preset air resistance coefficient of a scene and a preset air resistance coefficient of the projectile; the wind force may be calculated based on a preset wind force of a scene and a preset wind resistance coefficient of the projectile; the acceleration of gravity may be calculated based on a preset acceleration of gravity of a scene and a preset acceleration of gravity coefficient of the projectile; the gravity of the projectile may be calculated based on a preset mass of the projectile and the calculated acceleration of gravity, etc.

For example, calculation of these forces may be performed as follows:

$$AirForce = SceneAirResistance * BombAirResitFactor \quad (1)$$

where AirForce represents the air resistance applied to the projectile; SceneAirResistance represents an air resistance coefficient of a scene; and BombAirResitFactor represents an air resistance coefficient of a projectile.

$$WindForce = SceneWind * BombWindFactor \quad (2)$$

where WindForce represents a wind force applied to the projectile; SceneWind represents a wind force of a scene; and BombWindFactor represents a wind resistance coefficient of a projectile.

$$G = SceneGravity * BombGravityFactor \quad (3)$$

where G represents the acceleration of gravity; SceneGravity represents the acceleration of gravity of a scene; and BombGravityFactor represents the acceleration of gravity coefficient of a projectile.

$$WeightForce = G*BombMass \qquad (4)$$

where WeightForce represents the gravity of a projectile; G represent the acceleration of gravity; and BombMass represents the mass of a projectile.

By changing each parameter in the above formulas, various forces acting on the projectile during the flight may be adjusted, thus affecting the trajectory of the projectile.

Calculation step 2: setting an initial state of the projectile, such as an initial position and/or an initial velocity of the projectile.

$(X_o,Y_o)$: the initial position of the projectile, that is, the position at which the player launches the projectile;
$(V_x,V_y)$: the initial velocity (a vector) of the projectile, that is, an initial flight direction and a speed of the projectile.

Calculation step 3: based on the initial state of the projectile and the influence of external forces, trajectory coordinates of the projectile are calculated in sequence by integration operations, where a fixed length of integration interval is denoted by dt; each new velocity and coordinate of the projectile are calculated based on the previous velocity and coordinate. More specifically:

$$Ax = (WindForce - AirForce*Vx)/BombMass \qquad (5)$$

where Ax represents X-axis acceleration of the projectile;

$$Vx = Vx + Ax*dt \qquad (6)$$

where Vx represents an X-axis velocity of the projectile;

$$X = X + Vx*dt \qquad (7)$$

where X represents an X-axis coordinate of the projectile;

$$Ay = (WeightForce - AirForce*Vy)/BombMass \qquad (8)$$

where Ay represents Y-axis acceleration of the projectile;

$$Vy = Vy + Ay*dt \qquad (9)$$

where Vy represents a Y-axis velocity of the projectile;

$$Y = Y + Vy*dt \qquad (10)$$

where Y represents a Y-axis coordinate of the projectile.

After performing each integration calculation, based on the obtained coordinates (X,Y) of the projectile, the server judges whether the corresponding bit value (i.e. the bit value corresponding to the obtained coordinates of the projectile) on the terrain map is 1. Based on the judgment, the server then determines whether the projectile collides with the terrain. If the projectile collides with the terrain, the integration calculation process is stopped; otherwise, the next integration calculation is performed. During the integration calculation process, the smaller the value of dt is, the more accurate the calculation result of the trajectory of the projectile is, but more CPU resources are consumed.

Based on the above calculation results, the coordinates of the trajectory of the projectile are obtained. The server sends the obtained coordinates of the trajectory of the projectile to the client.

Step 103: the client shows launch of the projectile based on the trajectory of the projectile.

After the client receives the coordinates of the trajectory of the projectile from the server, the client shows a specific picture for the motion of the projectile based on the coordinates of the trajectory of the projectile.

In some online games, the projectile has an impact on the terrain. For example, launched tank bombs blast holes in the ground; and launched aircraft missiles blast holes in the hill. Thus, the projectile also has an impact on the game terrain of the game map after collision.

Terrain data in battle games may be prestored on the server. The terrain data may be called from the memory when needed. When the terrain data in the battle games are stored in the memory, each pixel of the game map is stored in the memory as a bit. For example, the pixel that has a terrain may be set to 1 in the memory; and the pixel that has no terrain may be set to 0 in the memory. The terrain data represented by 0 and 1 are arranged by the bits. Then, the arranged data may be stored in the bytes of the memory. In practice, the above calculation may be conducted by pixels.

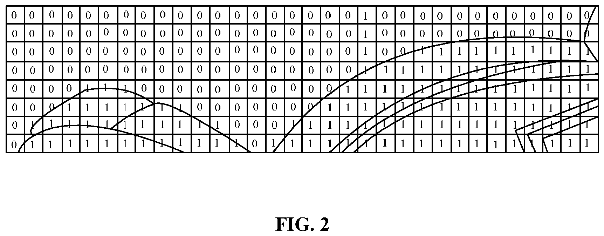

Figure 2 illustrates a schematic diagram of an exemplary online game map that is divided into numerous terrain squares consistent with the disclosed embodiments. As shown in Figure 2, a game map may be divided into numerous terrain squares, where the square that has a terrain may be stored as 1; the square that has no terrain may be stored as 0.

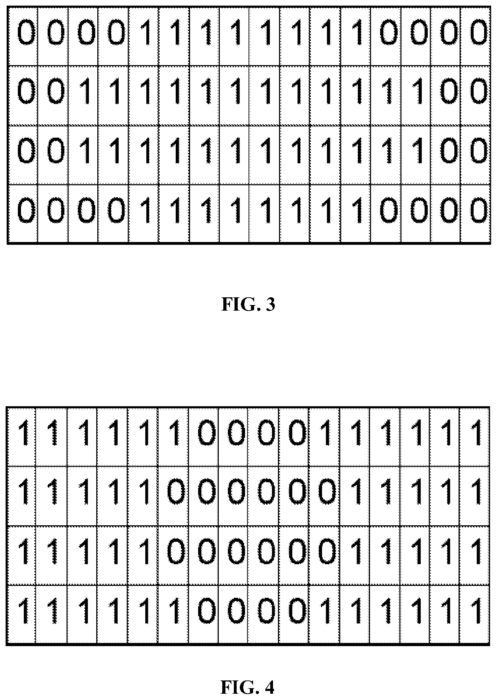

Based on the terrain shown in Figure 2, Figure 3 illustrates a data storage diagram of an exemplary online game map consistent with the disclosed embodiments. As shown in Figure 3, values of the terrain data stored on the server are: (0x0FF0, 0x3FFC, 0x3FFC, 0x0FF0).

The hole map data of the projectile in the battle game may also be prestored on the server. The data may be called from the memory when needed. The hole map data of the projectile is used to deduct or fill the terrain data when the projectile impacts the terrain, so as to achieve the purpose of destroying the terrain or filling the terrain.

The storage implementation for the hole map data of the projectile is similar to the storage implementation for the terrain data. Each pixel of the hole map of the projectile may be represented by 0 or 1. The hole map data of the projectile are stored in the memory through a sequence of bytes with each bit representing different meaning. For example, 1 represents the terrain that needs not to be hollowed, and 0 represents the terrain that needs to be hollowed.

Figure 4 illustrates a data storage diagram of an exemplary hole map of the projectile consistent with the disclosed embodiments. As shown in Figure 4, the hole map is a destructive hole map that is hollowed out 20 pixels in the middle. The values of the hole map data of the projectile stored on the server are: (0xFC3F, 0xF81F, 0xF81F, 0xFC3F).

The terrain data of online games arranged by the bits and the hole map data of the projectile arranged by the bits are stored on the server. Further, the server calculates terrain impact parameters of the projectile for the terrain based on the terrain data of online games and the hole map data of the projectile, and sends the terrain impact parameters to the client. The client further shows the effects of the projectile on the terrain based on the terrain impact parameters.

The terrain impact parameters represent the effects of the projectile on the terrain. The effects generally include: the destruction of the terrain (for example, the projectile causes a hole in the ground after explosion) and the fill of the terrain (for example, after the projectile collides on the ground, a piece of the terrain is filled out in the ground).

When the effects of the projectile is the destruction of the terrain, each pixel of the game map is stored on the server as a bit, where the pixel that has a terrain may be set to 1; and the pixel that has no terrain may be set to 0. The hole map data of the projectile are stored on the server by bits, where the bit representing the terrain that needs to be hollowed may be set to 0, and the bit representing the terrain that needs not to be hollowed may be set to 1. Then, the server performs a logical bitwise AND operation for the terrain data of the online game and the hole map data of the projectile to obtain the terrain impact parameters.

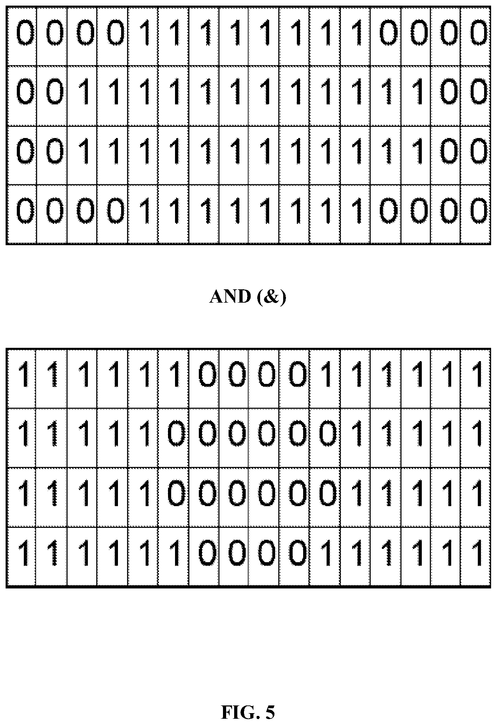

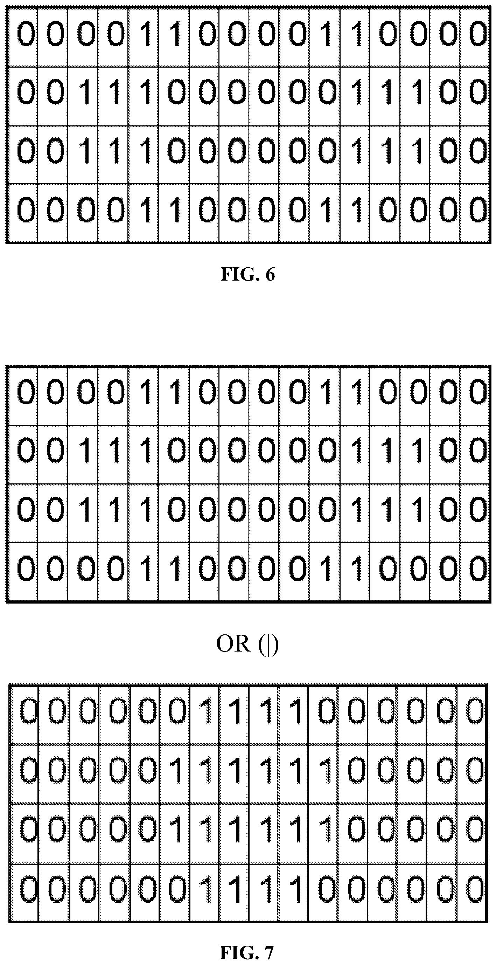

Figure 5 illustrates a schematic diagram of an exemplary AND operation for the terrain data of online games and the hole map data of the projectile consistent with the disclosed embodiments. Figure 6 illustrates a schematic diagram of a result of the exemplary AND operation for the terrain data of online games and the hole map data of the projectile consistent with the disclosed embodiments.

As shown in Figure 5 and Figure 6, the inputs of the terrain data of online games and the hole map data of the projectile for the AND operation are (0x0FF0, 0x3FFC,0x3FFC, 0x0FF0), (0xFC3F, 0xF81F, 0xF81F, 0xFC3F), respectively. After performing a bitwise AND operation, the result is (0x0C30, 0x381C, 0x381C, 0x0C30). That is, the result is the terrain that is hollowed out 20 pixels in the middle.

When the effects of the projectile is the fill of the terrain, each pixel of the game map is stored on the server as a bit, where the pixel that has a terrain may be set to 1; and the pixel that has no terrain may be set to 0. The hole map data of the projectile are stored on the server by bits, where the bit represents the terrain that needs to be filled may be set to 1, and the bit represents the terrain that needs not to be filled may be set to 0. Then, the server performs a logical bitwise OR operation for the terrain data of the online game and the hole map data of the projectile to obtain the terrain impact parameters.

Figure 7 illustrates a schematic diagram of an exemplary OR operation for terrain data and hole map data of the projectile consistent with the disclosed embodiments. Figure 8 illustrates a schematic diagram of a result of the exemplary OR operation for terrain data and hole map data of the projectile consistent with the disclosed embodiments.

As shown in Figure 7 and Figure 8, the inputs of the terrain data and the hole map data of the projectile for the OR operation are (0x0C30, 0x381C, 0x381C, 0x0C30), (0x03C0, 0x07E0, 0x07E0, 0x0C30), respectively. After performing a logical OR operation, the holes in a terrain are filled in.

The above specific bit values and logic operations for damaging and filling the terrain are only exemplary. The skilled in the art can understand that the above described embodiments are merely specific embodiments of the present invention, and the protection scope of the present invention is not limited thereto. In practice, some modification for bit values and logic operations may obtain the similar effect, and any modification or substitution easily conceivable to persons skilled in the art within the technical scope disclosed in the present invention shall be covered by the protection scope of the present invention.

Return to Figure 9, the game system 900 may implement an exemplary anti-cheating system for online games consistent with the disclosed embodiments. As shown in Figure 9, the online game anti-cheating system includes the client 901 and the server 902.

The client 901 (e.g., a processor 1002 of the client 901) is configured to obtain user operation commands and determine launch parameters of the projectile based on the user operation commands. The client 901 is also configured to send the launch parameters to the server and present the launch of the projectile to the user based on the trajectory of the projectile.

The server 902 (e.g., a processor 1002 of the server 902) is configured to calculate the trajectory of the projectile based on the launch parameters and send the trajectory of the projectile to the client.

More specifically, the server 902 is configured to store the terrain data of an online game arranged by the bits and the hole map data of the projectile arranged by the bits, to calculate terrain impact parameters of the projectile on the terrain based on the terrain data of online game and the hole map data of the projectile, and to send the terrain impact parameters to the client.

After receiving the terrain impact parameters from the server 902, the client 901 further presents to the user with the effects of the projectile on the terrain based on the terrain impact parameters.

In certain embodiments, the terrain data and the hole map data, along with other data, may be stored on the server 902 in any appropriate ways. For example, the server 902 may store each pixel of the game map as a bit, where the pixel that has a terrain may be set to 1 and the pixel that has no terrain may be set to 0. The server 902 may store the hole map data of the projectile arranged by the bits, where the bits representing the terrain that needs to be hollowed may be set to 0, and the bits representing the terrain that needs not to be hollowed may be set to 1. Further, to obtain the terrain impact parameters, the server 902 may perform a logical bitwise AND operation for the terrain data of the online game and the hole map data of the projectile. The client 901 can then show the deduction effects of the projectile on the terrain based on the terrain impact parameters

In certain other embodiments, the server 902 may store each pixel of the game map as a bit, where the pixel that has a terrain may be set to 1; and the pixel that has no terrain may be set to 0. The server 902 may store the hole map data of the projectile arranged by the bits, where the bit representing the terrain that needs to be filled may be set to 1, and the bit representing the terrain that needs not to be filled may be set to 0. Further, to obtain the terrain impact parameters, the server 902 may perform a logical bitwise OR operation for the terrain data of the online game and the hole map data of the projectile. The client 901 can then show the filling effects of the projectile on the terrain based on the terrain impact parameters.

In certain embodiments, the server 902 may calculate forces involved in the projectile motion; set an initial state of the projectile; and calculate trajectory coordinates of the projectile by integration operation based on the initial state of the projectile and forces involved in the projectile motion.

More specifically, the server 902 may calculate an air resistance based on a preset air resistance coefficient of a scene and a preset air resistance coefficient of the projectile; calculate a wind force based on a preset wind force of a scene and a preset wind resistance coefficient of the projectile; calculate acceleration of gravity based on a preset acceleration of gravity of a scene and a preset acceleration of gravity coefficient of the projectile; and calculate a gravity of the projectile based on a preset mass of the projectile and the calculated acceleration of gravity, etc.

INDUSTRIAL APPLICABILITY AND ADVANTAGEOUS EFFECTS

By using the disclosed methods and systems on any online application, the client obtains user operation commands, determines launch parameters of the projectile based on the user operation commands, and sends the launch parameters to the server; and the server calculates the trajectory of the projectile based on the launch parameters and sends the trajectory of the projectile to the client. The client can then show launch of the projectile based on the trajectory of the projectile. Thus, the server performs key logical operations and sends the operation results to the client. The client only shows the results rather than performs the key logical operations. Therefore, plug-in can be prevented, and the fairness of the game can be improved.

In addition, because the server calculates the terrain impact parameters and the coordinates of the projectile, computing consumption of the client computer can be reduced and the speed of online games can be further increased.

**Claims**

1. An anti-cheating method for online games between a server (902) and a client (901), comprising:

   receiving, by the server (902), launch parameters of a projectile from the client (901), wherein the launch parameters are determined based on user operation commands obtained by the client (901);
   **characterized in that** the method further comprises:

   calculating, by the server (902), a trajectory of the projectile based on the launch parameters;
   sending, by the server (902), the trajectory of the projectile to the client (901) such that the client (901) shows launch of the projectile based on the trajectory of the projectile;
   storing, by the server (902), terrain data of a game map and hole map data of the projectile;
   calculating, by the server (902), terrain impact parameters of the projectile based on the terrain data of the game map and the hole map data of the projectile; and
   sending, by the server (902), the terrain impact parameters to the client (901) such that the client (901) shows effects of the projectile on a terrain based on the terrain impact parameters;
   wherein storing terrain data of a game map and hole map data of the projectile further comprises:

   storing, by the server (902), each pixel of the game map as a bit, wherein the pixel that has a terrain is set to 1, and the pixel that has no terrain is set to 0; and
   storing, by the server (902), the hole map data of the projectile, wherein the bit representing the terrain that needs to be hollowed is set to 0, and the bit representing the terrain that needs not to be hollowed is set to 1;
   wherein calculating, by the server (902), the terrain impact parameters of the projectile based on the terrain data of the game map and the hole map data of the projectile comprises: performing a logical bitwise AND operation for the terrain data of the game map and the hole map data of the projectile;
   wherein the effects of the projectile comprise destruction of the terrain.

2. The method according to claim 1, wherein storing terrain data of a game map and hole map data of the projectile further comprises:

   storing, by the server (902), each pixel of the game map as a bit, wherein the pixel that has a terrain is set to 1, and the pixel that has no terrain is set to 0; and
   storing, by the server (902), the hole map data of the projectile, wherein the bit representing the terrain that needs to be filled is set to 1, and the bit representing the terrain that needs not to be filled is set to 0;
   wherein calculating, by the server (902), the terrain impact parameters of the projectile based on the terrain data of the game map and the hole map data of the projectile comprises: performing a logical bitwise OR operation for the terrain data of the game map and the hole map data of the projectile;
   wherein the effects of the projectile comprising fill of the terrain.

3. The method according to claim 1, wherein calculating the trajectory of the projectile based on the launch parameters further comprises:

   calculating forces involved in a motion of the projectile;
   setting an initial state of the projectile; and
   calculating trajectory coordinates of the projectile by integration based on the initial state and the forces involved in the motion of the projectile.

4. The method according to claim 3, wherein calculating forces involved in the motion of the projectile further comprises:

   calculating air resistance applied to the projectile based on a preset air resistance coefficient of a scene and a preset air resistance coefficient of the projectile;
   calculating a wind force applied to the projectile based on a preset wind force of a scene and a preset wind resistance coefficient of the projectile;
   calculating acceleration of gravity based on a preset acceleration of gravity of a scene and a preset acceleration of gravity coefficient of the projectile; and
   calculating the gravity of the projectile based on a preset mass of the projectile and the calculated acceleration of gravity.

**5.** An anti-cheating system (900) for online games, comprising:

a client (901) and a server (902) connecting the client (901) through the Internet, wherein:

the client (901) is configured to:

obtain user operation commands;
determine launch parameters of a projectile based on the user operation commands;
send the launch parameters to the server (902); and
**characterized in that** the client is further configured to show the launch of the projectile based on a trajectory of the projectile received from the server (902); and

the server (902) is configured to:

calculate the trajectory of the projectile based on the launch parameters;
send the trajectory of the projectile to the client (901);
store terrain data of a game map and hole map data of the projectile;
calculate terrain impact parameters of the projectile on a terrain based on the terrain data of the game map and the hole map data of the projectile; and
send the terrain impact parameters to the client (901); and
wherein the client (901) is further configured to show effects of the projectile on the terrain based on the terrain impact parameters;
wherein the server (902) is further configured to:

store each pixel of the game map as a bit, wherein the pixel that has a terrain may be set to 1, and the pixel that has no terrain may be set to 0;
store the hole map data of the projectile, wherein the bit representing the terrain that needs to be hollowed is set to 0, and the bit representing the terrain that needs not to be hollowed is set to 1; and
perform a logical bitwise AND operation for the terrain data of the game map and the hole map data of the projectile to obtain the terrain impact parameters; and
wherein the client (901) is configured to show the effects of the projectile on deducting the terrain based on the terrain impact parameters.

**6.** The system according to claim 5, wherein the server (902) is further configured to:

store each pixel of the game map as a bit, wherein the pixel that has a terrain is set to 1, and the pixel that has no terrain is set to 0;
store the hole map data of the projectile, wherein the bit representing the terrain that needs to be filled is set to 1, and the bit representing the terrain that needs not to be filled is set to 0; and
perform a logical bitwise OR operation for the terrain data of the game map and the hole map data of the projectile to obtain the terrain impact parameters; and
wherein the client (901) is further configured to show the effects of the projectile on filling the terrain based on the terrain impact parameters.

**7.** The system (900) according to claim 5, wherein the server (902) is further configured to:

calculate forces involved in a motion of the projectile;
set an initial state of the projectile; and
calculate trajectory coordinates of the projectile by integration based on the initial state and the forces involved in the motion of the projectile.

**8.** The system (900) according to claim 7, wherein the server (902) is further configured to:

calculate air resistance applied to the projectile based on a preset air resistance coefficient of a scene and a preset air resistance coefficient of the projectile;
calculate wind force applied to the projectile based on a preset wind force of a scene and a preset wind resistance coefficient of the projectile;

calculate acceleration of gravity based on a preset acceleration of gravity of a scene and a preset acceleration of gravity coefficient of the projectile; and

calculate gravity of the projectile based on a preset mass of the projectile and the calculated acceleration of gravity.

9. A server (902) for online games, the server (902) is configured to:

receive launch parameters of a projectile from a client;
**characterized in that** the server is further configured to:

calculate a trajectory of the projectile based on the launch parameters;
send the trajectory of the projectile to the client;
store terrain data of a game map and hole map data of the projectile;
calculate terrain impact parameters of the projectile based on the terrain data of the game map and the hole map data of the projectile; and
send the terrain impact parameters to the client (901);

wherein the server is further configured to:

store each pixel of the game map as a bit, wherein the pixel that has a terrain is set to 1, and the pixel that has no terrain is set to 0; and
store the hole map data of the projectile, wherein the bit representing the terrain that needs to be hollowed is set to 0, and the bit representing the terrain that needs not to be hollowed is set to 1;
perform a logical bitwise AND operation for the terrain data of the game map and the hole map data of the projectile to obtain the terrain impact parameters;
wherein the effects of the projectile comprise destruction of the terrain.


**Patentansprüche**

1. Anti-Betrugsverfahren für Online-Spiele zwischen einem Server (902) und einem Client (901), das Folgendes umfasst:

Empfangen durch den Server (902) von Abschussparametern eines Projektils von dem Client (901),
wobei die Abschussparameter anhand von Anwenderbedienungsbefehlen, die durch den Client (901) erhalten werden, bestimmt werden;
**dadurch gekennzeichnet, dass** das Verfahren ferner Folgendes umfasst:

Berechnen durch den Server (902) einer Bahn des Projektils anhand der Abschussparameter;
Senden durch den Server (902) der Bahn des Projektils an den Client (901), so dass der Client (901) den Abschuss des Projektils anhand der Bahn des Projektils zeigt;
Speichern durch den Server (902) von Geländedaten einer Spielkarte und von Lochkartendaten des Projektils;
Berechnen durch den Server (902) von Geländeeinflussparametern des Projektils anhand der Geländedaten der Spielkarte und der Lochkartendaten des Projektils; und
Senden durch den Server (902) der Geländeeinflussparameter an den Client (901), so dass der Client (901) Auswirkungen des Projektils auf ein Gelände anhand der Geländeeinflussparameter zeigt;
wobei das Speichern von Geländedaten einer Spielkarte und von Lochkartendaten des Projektils ferner Folgendes umfasst:

Speichern durch den Server (902) jedes Pixels der Spielkarte als ein Bit, wobei das Pixel, das ein Gelände besitzt, auf 1 eingestellt wird, und das Pixel, das kein Gelände besitzt, auf 0 eingestellt wird; und
Speichern durch den Server (902) der Lochkartendaten des Projektils, wobei das Bit, das das Gelände repräsentiert, das ausgehöhlt werden muss, auf 0 eingestellt wird, und das Bit, das Gelände repräsentiert, das nicht ausgehöhlt werden muss, auf 1 eingestellt wird;
wobei das Berechnen durch den Server (902) der Geländeeinflussparameter des Projektils anhand der Geländedaten der Spielkarte und der Lochkartendaten des Projektils Folgendes umfasst: Ausführen einer logischen bitweisen UND-Operation für die Geländedaten der Spielkarte und der Lochkartendaten des Projektils;

wobei die Auswirkungen des Projektils eine Zerstörung des Geländes umfassen.

2. Verfahren nach Anspruch 1, wobei das Speichern von Geländedaten einer Spielkarte und von Lochkartendaten des Projektils ferner Folgendes umfasst:

Speichern durch den Server (902) jedes Pixels der Spielkarte als ein Bit, wobei das Pixel, das ein Gelände besitzt, auf 1 eingestellt wird und das Pixel, das kein Gelände besitzt, auf 0 eingestellt wird; und

Speichern durch den Server (902) der Lochkartendaten des Projektils, wobei das Bit, das das Gelände repräsentiert, das gefüllt werden muss, auf 1 eingestellt wird und das Bit, das das Gelände repräsentiert, das nicht gefüllt werden muss, auf 0 eingestellt wird;

wobei das Berechnen durch den Server (902) der Geländeeinflussparameter des Projektils anhand der Geländedaten der Spielkarte und der Lochkartendaten des Projektils Folgendes umfasst: Ausführen einer logischen bitweisen ODER-Operation für die Geländedaten der Spielkarte und der Lochkartendaten des Projektils;

wobei die Auswirkungen des Projektils das Füllen des Geländes umfassen.

3. Verfahren nach Anspruch 1, wobei das Berechnen der Bahn des Projektils anhand der Abschussparameter ferner Folgendes umfasst:

Berechnen von Kräften, die an einer Bewegung des Projektils beteiligt sind;

Einstellen eines Anfangszustands des Projektils; und

Berechnen von Bahnkoordinaten des Projektils durch Integration anhand des Anfangszustands und der an der Bewegung des Projektils beteiligten Kräfte.

4. Verfahren nach Anspruch 3, wobei das Berechnen von Kräften, die an der Bewegung des Projektils beteiligt sind, ferner Folgendes umfasst:

Berechnen eines Luftwiderstands, der auf das Projektil einwirkt, anhand eines im Voraus eingestellten Luftwiderstandskoeffizienten einer Szene und eines im Voraus eingestellten Luftwiderstandskoeffizienten des Projektils;

Berechnen einer Windkraft, die auf das Projektil einwirkt, anhand einer im Voraus eingestellten Windkraft einer Szene und eines im Voraus eingestellten Windwiderstandskoeffizienten des Projektils;

Berechnen einer Erdbeschleunigung anhand einer im Voraus eingestellten Erdbeschleunigung einer Szene und eines im Voraus eingestellten Erdbeschleunigungskoeffizienten des Projektils; und

Berechnen der Schwerkraft des Projektils anhand einer im Voraus eingestellten Masse des Projektils und der berechneten Erdbeschleunigung.

5. Anti-Betrugsverfahren (900) für Online-Spiele, das Folgendes umfasst:

einen Client (901) und einen Server (902), der sich mit dem Client (901) durch das Internet verbindet, wobei:

der Client (901) konfiguriert ist zum:

Erhalten von Anwenderbedienungsbefehlen;

Bestimmen von Abschussparametern eines Projektils anhand der Anwenderbedienungsbefehle;

Senden der Abschussparameter an den Server (902); und

**dadurch gekennzeichnet, dass** der Client ferner konfiguriert ist, den Abschuss des Projektils anhand einer Bahn des Projektils, die von dem Server (902) empfangen wird, zu zeigen; und

der Server (902) konfiguriert ist zum:

Berechnen der Bahn des Projektils anhand der Abschussparameter;

Senden der Bahn des Projektils an den Client (901);

Speichern von Geländedaten einer Spielkarte und von Lochkartendaten des Projektils;

Berechnen von Geländeeinflussparametern des Projektils auf ein Gelände anhand der Geländedaten der Spielkarte und der Lochkartendaten des Projektils; und

Senden der Geländeeinflussparameter an den Client (901); und

wobei der Client (901) ferner konfiguriert ist, Auswirkungen des Projektils auf das Gelände anhand der Geländeeinflussparameter zu zeigen;

wobei der Server (902) ferner konfiguriert ist zum:

Speichern jedes Pixels der Spielkarte als ein Bit, wobei das Pixel, das ein Gelände besitzt, auf 1 eingestellt werden kann, und das Pixel, das kein Gelände besitzt, auf 0 eingestellt werden kann;

Speichern der Lochkartendaten des Projektils, wobei das Bit, das das Gelände repräsentiert, das ausgehöhlt werden muss, auf 0 eingestellt wird, und das Bit, das das Gelände repräsentiert, das nicht ausgehöhlt werden muss, auf 1 eingestellt wird; und

Ausführen einer logischen bitweisen UND-Operation für die Geländedaten der Spielkarte und der Lochkartendaten des Projektils, um die Geländeeinflussparameter zu erhalten; und

wobei der Client (901) konfiguriert ist, die Auswirkungen des Projektils auf das Abtragen des Geländes anhand der Geländeeinflussparameter zu zeigen.

6. System nach Anspruch 5, wobei der Server (902) ferner konfiguriert ist zum:

Speichern jedes Pixels der Spielkarte als ein Bit, wobei das Pixel, das ein Gelände besitzt, auf 1 eingestellt wird und das Pixel, das kein Gelände besitzt, auf 0 eingestellt wird;

Speichern der Lochkartendaten des Projektils, wobei das Bit, das das Gelände repräsentiert, das gefüllt werden muss, auf 1 eingestellt wird und das Bit, das das Gelände repräsentiert, das nicht gefüllt werden muss, auf 0 eingestellt wird; und

Ausführen einer logischen bitweisen ODER-Operation für die Geländedaten der Spielkarte und der Lochkartendaten des Projektils, um die Geländeeinflussparameter zu erhalten; und

wobei der Client (901) ferner konfiguriert ist, die Auswirkungen des Projektils auf das Füllen des Geländes anhand der Geländeeinflussparameter zu zeigen.

7. System (900) nach Anspruch 5, wobei der Server (902) ferner konfiguriert ist zum:

Berechnen von Kräften, die an einer Bewegung des Projektils beteiligt sind;
Einstellen eines Anfangszustands des Projektils; und
Berechnen von Bahnkoordinaten des Projektils durch Integration anhand des Anfangszustands und der an der Bewegung des Projektils beteiligten Kräfte.

8. System (900) nach Anspruch 7, wobei der Server (902) ferner konfiguriert ist zum:

Berechnen eines Luftwiderstands, der auf das Projektil einwirkt, anhand eines im Voraus eingestellten Luftwiderstandskoeffizienten einer Szene und eines im Voraus eingestellten Luftwiderstandskoeffizienten des Projektils;

Berechnen einer Windkraft, die auf das Projektil einwirkt, anhand einer im Voraus eingestellten Windkraft einer Szene und eines im Voraus eingestellten Windwiderstandskoeffizienten des Projektils;

Berechnen einer Erdbeschleunigung anhand einer im Voraus eingestellten Erdbeschleunigung einer Szene und eines im Voraus eingestellten Erdbeschleunigungskoeffizienten des Projektils; und

Berechnen der Schwerkraft des Projektils anhand einer im Voraus eingestellten Masse des Projektils und der berechneten Erdbeschleunigung.

9. Server (902) für Online-Spiele, wobei der Server (902) konfiguriert ist zum:

Empfangen von Abschussparametern eines Projektils von einem Client,
**dadurch gekennzeichnet, dass** der Server ferner konfiguriert ist zum:

Berechnen einer Bahn des Projektils anhand der Abschussparameter;
Senden der Bahn des Projektils an den Client (901);
Speichern von Geländedaten einer Spielkarte und von Lochkartendaten des Projektils;
Berechnen von Geländeeinflussparametern des Projektils anhand der Geländedaten der Spielkarte und der Lochkartendaten des Projektils; und
Senden der Geländeeinflussparameter an den Client (901) ;
wobei der Server ferner konfiguriert ist zum:

Speichern jedes Pixels der Spielkarte als ein Bit, wobei das Pixel, das ein Gelände besitzt, auf 1 eingestellt wird, und das Pixel, das kein Gelände besitzt, auf 0 eingestellt wird; und
Speichern der Lochkartendaten des Projektils, wobei das Bit, das das Gelände repräsentiert, das ausgehöhlt werden muss, auf 0 eingestellt wird, und das Bit, das das Gelände repräsentiert, das nicht ausgehöhlt werden muss, auf 1 eingestellt wird;
Ausführen einer logischen bitweisen UND-Operation für die Geländedaten der Spielkarte und der Lochkartendaten des Projektils, um die Geländeeinflussparameter zu erhalten;
wobei die Auswirkungen des Projektils eine Zerstörung des Geländes umfassen.

## Revendications

1. Procédé anti-tricherie pour jeux en ligne entre un serveur (902) et un client (901), comportant :

   la réception, par le serveur (902), de paramètres de lancement d'un projectile en provenance du client (901), les paramètres de lancement étant déterminés d'après des consignes d'opération d'utilisateur obtenues par le client (901) ;
   **caractérisé en ce que** le procédé comporte en outre :

   le calcul, par le serveur (902), d'une trajectoire du projectile d'après les paramètres de lancement ;
   l'envoi, par le serveur (902), de la trajectoire du projectile au client (901) de telle façon que le client (901) montre le lancement du projectile d'après la trajectoire du projectile ;
   le stockage, par le serveur (902), de données de terrain d'une carte de jeu et de données de carte de trous du projectile ;
   le calcul, par le serveur (902), de paramètres d'impact de terrain du projectile d'après les données de terrain de la carte de jeu et les données de carte de trous du projectile ; et
   l'envoi, par le serveur (902), des paramètres d'impact de terrain au client (901) de telle façon que le client (901) montre les effets du projectile sur un terrain d'après les paramètres d'impact de terrain ;
   le stockage de données de terrain d'une carte de jeu et de données de carte de trous du projectile comportant en outre :

   le stockage, par le serveur (902), de chaque pixel de la carte de jeu comme un bit, le pixel doté d'un terrain étant positionné à 1, et le pixel dépourvu de terrain étant positionné à 0 ; et
   le stockage, par le serveur (902), des données de carte de trous du projectile, le bit représentant le terrain qu'il est nécessaire d'évider étant positionné à 0, et le bit représentant le terrain qu'il est nécessaire de ne pas évider étant positionné à 1 ;
   le calcul, par le serveur (902), des paramètres d'impact de terrain du projectile d'après les données de terrain de la carte de jeu et les données de carte de trous du projectile comportant : la réalisation d'une opération logique de ET par bits concernant les données de terrain de la carte de jeu et les données de carte de trous du projectile ;
   les effets du projectile comportant la destruction du terrain.

2. Procédé selon la revendication 1, le stockage de données de terrain d'une carte de jeu et de données de carte de trous du projectile comportant en outre :

   le stockage, par le serveur (902), de chaque pixel de la carte de jeu comme un bit, le pixel doté d'un terrain étant positionné à 1, et le pixel dépourvu de terrain étant positionné à 0 ; et
   le stockage, par le serveur (902), des données de carte de trous du projectile, le bit représentant le terrain qu'il est nécessaire de combler étant positionné à 1, et le bit représentant le terrain qu'il est nécessaire de ne pas combler étant positionné à 0 ;
   le calcul, par le serveur (902), des paramètres d'impact de terrain du projectile d'après les données de terrain de la carte de jeu et les données de carte de trous du projectile comportant : la réalisation d'une opération logique de OU par bits concernant les données de terrain de la carte de jeu et les données de carte de trous du projectile ;
   les effets du projectile comportant le comblement du terrain.

3. Procédé selon la revendication 1, le calcul de la trajectoire du projectile d'après les paramètres de lancement comportant en outre :

   le calcul de forces intervenant dans un mouvement du projectile ;
   la spécification d'un état initial du projectile ; et
   le calcul de coordonnées de trajectoire du projectile par intégration d'après l'état initial et les forces intervenant dans le mouvement du projectile.

4. Procédé selon la revendication 3, le calcul de forces intervenant dans le mouvement du projectile comportant en outre :

le calcul d'une résistance de l'air appliquée au projectile d'après un coefficient prédéfini de résistance de l'air d'une scène et un coefficient prédéfini de résistance de l'air du projectile ;
le calcul d'une force du vent appliquée au projectile d'après une force prédéfinie du vent d'une scène et un coefficient prédéfini de résistance due au vent du projectile ;
le calcul d'une accélération de la gravité d'après une accélération prédéfinie de la gravité d'une scène et un coefficient prédéfini d'accélération de la gravité du projectile ; et
le calcul de la gravité du projectile d'après une masse prédéfinie du projectile et l'accélération calculée de la gravité.

5. Système anti-tricherie (900) pour jeux en ligne, comportant :
un client (901) et un serveur (902) connectant le client (901) par l'intermédiaire d'Internet :
le client (901) étant configuré pour :

obtenir des consignes d'opération d'utilisateur ;
déterminer des paramètres de lancement d'un projectile d'après les consignes d'opération d'utilisateur ;
envoyer les paramètres de lancement au serveur (902) ; et
**caractérisé en ce que** le client est en outre configuré pour montrer le lancement du projectile d'après une trajectoire du projectile reçue en provenance du serveur (902) ; et
le serveur (902) étant configuré pour :

calculer la trajectoire du projectile d'après les paramètres de lancement ;
envoyer la trajectoire du projectile au client (901) ;
stocker des données de terrain d'une carte de jeu et des données de carte de trous du projectile ;
calculer des paramètres d'impact de terrain du projectile sur un terrain d'après les données de terrain de la carte de jeu et les données de carte de trous du projectile ; et
envoyer les paramètres d'impact de terrain au client (901) ; et
le client (901) étant en outre configuré pour montrer des effets du projectile sur le terrain d'après les paramètres d'impact de terrain ;
le serveur (902) étant en outre configuré pour :

stocker chaque pixel de la carte de jeu comme un bit, le pixel doté d'un terrain pouvant être positionné à 1, et le pixel dépourvu de terrain pouvant être positionné à 0 ;
stocker les données de carte de trous du projectile, le bit représentant le terrain qu'il est nécessaire d'évider étant positionné à 0, et le bit représentant le terrain qu'il est nécessaire de ne pas évider étant positionné à 1 ; et
réaliser une opération logique de ET par bits concernant les données de terrain de la carte de jeu et les données de carte de trous du projectile pour obtenir les paramètres d'impact de terrain ; et
le client (901) étant configuré pour montrer les effets du projectile sur la soustraction du terrain d'après les paramètres d'impact de terrain.

6. Système selon la revendication 5, le serveur (902) étant en outre configuré pour :

stocker chaque pixel de la carte de jeu comme un bit, le pixel doté d'un terrain étant positionné à 1, et le pixel dépourvu de terrain étant positionné à 0 ;
stocker les données de carte de trous du projectile, le bit représentant le terrain qu'il est nécessaire de combler étant positionné à 1, et le bit représentant le terrain qu'il est nécessaire de ne pas combler étant positionné à 0 ; et
réaliser une opération logique de OU par bits concernant les données de terrain de la carte de jeu et les données de carte de trous du projectile pour obtenir les paramètres d'impact de terrain ; et
le client (901) étant en outre configuré pour montrer les effets du projectile sur le comblement du terrain d'après les paramètres d'impact de terrain.

7. Système (900) selon la revendication 5, le serveur (902) étant en outre configuré pour :

calculer des forces intervenant dans un mouvement du projectile ;

spécifier un état initial du projectile ; et

calculer des coordonnées de trajectoire du projectile par intégration d'après l'état initial et les forces intervenant dans le mouvement du projectile.

**8.** Système (900) selon la revendication 7, le serveur (902) étant en outre configuré pour :

calculer une résistance de l'air appliquée au projectile d'après un coefficient prédéfini de résistance de l'air d'une scène et un coefficient prédéfini de résistance de l'air du projectile ;

calculer une force du vent appliquée au projectile d'après une force prédéfinie du vent d'une scène et un coefficient prédéfini de résistance due au vent du projectile ;

calculer une accélération de la gravité d'après une accélération prédéfinie de la gravité d'une scène et un coefficient prédéfini d'accélération de la gravité du projectile ; et

calculer une gravité du projectile d'après une masse prédéfinie du projectile et l'accélération calculée de la gravité.

**9.** Serveur (902) pour jeux en ligne, le serveur (902) étant configuré pour :

recevoir des paramètres de lancement d'un projectile en provenance d'un client ;

**caractérisé en ce que** le serveur est en outre configuré pour :

calculer une trajectoire du projectile d'après les paramètres de lancement ;

envoyer la trajectoire du projectile au client ;

stocker des données de terrain d'une carte de jeu et des données de carte de trous du projectile ;

calculer des paramètres d'impact de terrain du projectile d'après les données de terrain de la carte de jeu et les données de carte de trous du projectile ; et

envoyer les paramètres d'impact de terrain au client (901) ;

le serveur étant en outre configuré pour :

stocker chaque pixel de la carte de jeu comme un bit, le pixel doté d'un terrain étant positionné à 1, et le pixel dépourvu de terrain étant positionné à 0 ; et

stocker les données de carte de trous du projectile, le bit représentant le terrain qu'il est nécessaire d'évider étant positionné à 0, et le bit représentant le terrain qu'il est nécessaire de ne pas évider étant positionné à 1 ;

réaliser une opération logique de ET par bits concernant les données de terrain de la carte de jeu et les données de carte de trous du projectile pour obtenir les paramètres d'impact de terrain ;

les effets du projectile comportant la destruction du terrain.

A client obtains user operation commands and determines launch parameters of a projectile based on the user operation commands. The client also sends the launch parameters to a server — 101

The server calculates a trajectory of the projectile based on the launch parameters and sends the trajectory of the projectile to the client — 102

The client shows launch of the projectile based on the trajectory of the projectile — 103

**FIG. 1**

**FIG. 2**

| 0 | 0 | 0 | 0 | 1 | 1 | 1 | 1 | 1 | 1 | 1 | 1 | 0 | 0 | 0 | 0 |
| 0 | 0 | 1 | 1 | 1 | 1 | 1 | 1 | 1 | 1 | 1 | 1 | 1 | 0 | 0 | |
| 0 | 0 | 1 | 1 | 1 | 1 | 1 | 1 | 1 | 1 | 1 | 1 | 1 | 0 | 0 | |
| 0 | 0 | 0 | 0 | 1 | 1 | 1 | 1 | 1 | 1 | 1 | 0 | 0 | 0 | 0 | |

**FIG. 3**

| 1 | 1 | 1 | 1 | 1 | 1 | 0 | 0 | 0 | 0 | 1 | 1 | 1 | 1 | 1 | 1 |
| 1 | 1 | 1 | 1 | 1 | 0 | 0 | 0 | 0 | 0 | 0 | 1 | 1 | 1 | 1 | 1 |
| 1 | 1 | 1 | 1 | 1 | 0 | 0 | 0 | 0 | 0 | 0 | 1 | 1 | 1 | 1 | 1 |
| 1 | 1 | 1 | 1 | 1 | 1 | 0 | 0 | 0 | 0 | 1 | 1 | 1 | 1 | 1 | 1 |

**FIG. 4**

| 0 | 0 | 0 | 0 | 1 | 1 | 1 | 1 | 1 | 1 | 1 | 1 | 0 | 0 | 0 | 0 |
| 0 | 0 | 1 | 1 | 1 | 1 | 1 | 1 | 1 | 1 | 1 | 1 | 1 | 1 | 0 | 0 |
| 0 | 0 | 1 | 1 | 1 | 1 | 1 | 1 | 1 | 1 | 1 | 1 | 1 | 1 | 0 | 0 |
| 0 | 0 | 0 | 0 | 1 | 1 | 1 | 1 | 1 | 1 | 1 | 1 | 0 | 0 | 0 | 0 |

## AND (&)

| 1 | 1 | 1 | 1 | 1 | 0 | 0 | 0 | 0 | 1 | 1 | 1 | 1 | 1 |
| 1 | 1 | 1 | 1 | 1 | 0 | 0 | 0 | 0 | 0 | 1 | 1 | 1 | 1 |
| 1 | 1 | 1 | 1 | 1 | 0 | 0 | 0 | 0 | 0 | 1 | 1 | 1 | 1 |
| 1 | 1 | 1 | 1 | 1 | 1 | 0 | 0 | 0 | 1 | 1 | 1 | 1 | 1 |

**FIG. 5**

FIG. 6

| 0 | 0 | 0 | 0 | 1 | 1 | 0 | 0 | 0 | 0 | 1 | 1 | 0 | 0 | 0 | 0 |
|---|---|---|---|---|---|---|---|---|---|---|---|---|---|---|---|
| 0 | 0 | 1 | 1 | 1 | 0 | 0 | 0 | 0 | 0 | 1 | 1 | 1 | 0 | 0 | |
| 0 | 0 | 1 | 1 | 1 | 0 | 0 | 0 | 0 | 0 | 1 | 1 | 1 | 0 | 0 | |
| 0 | 0 | 0 | 0 | 1 | 1 | 0 | 0 | 0 | 0 | 1 | 1 | 0 | 0 | 0 | 0 |

OR (|)

| 0 | 0 | 0 | 0 | 1 | 1 | 0 | 0 | 0 | 0 | 1 | 1 | 0 | 0 | 0 | 0 |
|---|---|---|---|---|---|---|---|---|---|---|---|---|---|---|---|
| 0 | 0 | 1 | 1 | 1 | 0 | 0 | 0 | 0 | 0 | 1 | 1 | 1 | 0 | 0 | |
| 0 | 0 | 1 | 1 | 1 | 0 | 0 | 0 | 0 | 0 | 1 | 1 | 1 | 0 | 0 | |
| 0 | 0 | 0 | 0 | 1 | 1 | 0 | 0 | 0 | 1 | 1 | 0 | 0 | 0 | 0 | |

| 0 | 0 | 0 | 0 | 0 | 0 | 1 | 1 | 1 | 1 | 0 | 0 | 0 | 0 | 0 | 0 |
|---|---|---|---|---|---|---|---|---|---|---|---|---|---|---|---|
| 0 | 0 | 0 | 0 | 0 | 1 | 1 | 1 | 1 | 1 | 0 | 0 | 0 | 0 | 0 | |
| 0 | 0 | 0 | 0 | 0 | 1 | 1 | 1 | 1 | 1 | 0 | 0 | 0 | 0 | 0 | |
| 0 | 0 | 0 | 0 | 0 | 0 | 1 | 1 | 1 | 1 | 0 | 0 | 0 | 0 | 0 | 0 |

FIG. 7

| 0 | 0 | 0 | 0 | 1 | 1 | 1 | 1 | 1 | 1 | 1 | 1 | 0 | 0 | 0 | 0 |
| 0 | 0 | 1 | 1 | 1 | 1 | 1 | 1 | 1 | 1 | 1 | 1 | 1 | 1 | 0 | 0 |
| 0 | 0 | 1 | 1 | 1 | 1 | 1 | 1 | 1 | 1 | 1 | 1 | 1 | 1 | 0 | 0 |
| 0 | 0 | 0 | 0 | 1 | 1 | 1 | 1 | 1 | 1 | 1 | 1 | 0 | 0 | 0 | 0 |

**FIG. 8**

900

| Client<br>901 | ←→ | Server<br>902 |

**FIG. 9**

1000

| | |
|---|---|
| Storage medium 1004 | Communication module 1008 |

Processor 1002

Monitor 1006

Database 1010

Peripherals 1012

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1737178 A1
- EP 2144032 A
- GB 1424299 A